# EUROPÄISCHE PATENTSCHRIFT

(11) **EP 2 857 604 B1**
(45) Veröffentlichungstag und Bekanntmachung des Hinweises auf die Patenterteilung: **09.01.2019**
(21) Anmeldenummer: 14003394.5
(22) Anmeldetag: 01.10.2014
(51) Int. Cl.: E03D 11/14, E03C 1/322, F16B 41/00

(54) **Befestiger für ein wandhängendes Objekt**
Fastener for a wall-hung object
Dispositif de fixation pour un objet suspendu au mur

(30) Priorität: 02.10.2013 DE 102013110966
(43) Veröffentlichungstag der Anmeldung: 08.04.2015
(73) Patentinhaber: fischerwerke GmbH & Co. KG, 72178 Waldachtal (DE)
(72) Erfinder: Miotto, Moreno, IT-35028 Piove di Sacco (IT); Tresoldi, Antonio, IT-35020 Masera di Padova (PD) (IT)

(56) Entgegenhaltungen:
- WO-A1-2013/062493
- DE-U1- 9 303 865
- DE-U1-202009 014 171
- DE-U1-202012 104 847

## Beschreibung

Die Erfindung betrifft einen Befestiger für ein wandhängendes Objekt mit den Merkmalen des Oberbegriffs des Anspruchs 1. Insbesondere ist der Befestiger für ein wandhängendes Sanitärobjekt wie beispielsweise ein Waschbecken und vorzugsweise für eine wandhängende Toilette vorgesehen. Sanitärobjekte bestehen oft aus Keramik und benötigen geeignete Befestigungen bzw. Befestiger. Allerdings ist die Erfindung nicht auf Sanitärobjekte und auch nicht auf Objekte aus Keramik, Steingut oder ähnlichem Material beschränkt, sondern eignet sich auch für Objekte und Sanitärobjekte aus beispielsweise Kunststoff.

Ein Befestiger für wandhängende Toiletten ist bekannt aus der EP 2 199 473 A1. Der bekannte Befestiger weist die Form einer Hülse auf und wird in eine Aufnahme zwischen zwei parallelen, die Aufnahme begrenzenden Wänden der Toilette angeordnet. Stirnseiten des Befestigers sind den beiden Wänden der Aufnahme zugewandt. Eine der beiden Wände der Aufnahme befindet sich an einer Rückseite der Toilette und weist ein Loch zum Durchtritt eines Bolzens auf, der in einer Wand befestigt ist bzw. wird, an der die Toilette wandhängend befestigt werden soll. Die Rückseite der Toilette ist eine der Wand zugewandte Seite, mit der die Toilette an der Wand anliegt, wenn sie in vorgesehener Weise an der Wand befestigt ist. Zur wandhängenden Befestigung wird der bekannte Befestiger in der Aufnahme der Toilette angeordnet und die Toilette wird auf den zuvor in der Wand befestigten und aus der Wand vorstehenden Bolzen aufgesetzt, so dass der Bolzen durch das Loch in der Wand an der Rückseite der Toilette durchtritt und in den hülsenförmigen Befestiger eintritt. Auf dem Bolzen wird die Toilette bis an die Wand anliegend bewegt und es wird eine Inbusschraube in ein radiales Innengewindeloch des Befestigers eingedreht und festgezogen, die gegen den Bolzen stößt und den Befestiger auf dem Bolzen festklemmt. Die Toilette ist dadurch wandhängend befestigt. Die Befestigung erfolgt mit zwei Bolzen und zwei Befestigern, die Toilette weist zwei Aufnahmen für Befestiger auf.

Aufgabe der Erfindung ist eine Weiterentwicklung eines Befestigers der vorstehend erläuterten Art, der eine Handhabung einer wandhängenden Toilette, allgemeiner eines wandhängenden Sanitärobjekts und allgemein eines wandhängenden Objekts, beim Aufsetzen auf einen in einer Wand befestigten und aus der Wand vorstehenden Bolzen zur Befestigung des Objekts an der Wand vereinfacht.

Gelöst wird diese Aufgabe durch einen Befestiger der im Anspruch 1 angegebenen Art. Der erfindungsgemäße Befestiger weist ein Loch zum Aufsetzen des Befestigers auf einen Bolzen auf. Das Loch kann ein Sackloch sein, vorzugsweise ist es ein Durchgangsloch, eine Ausgestaltung der Erfindung sieht einen Befestiger mit der Form einer Hülse vor. Des Weiteren weist der erfindungsgemäße Befestiger ein elastisches Element auf, das in einer Längsrichtung des Lochs des Befestigers wirkt. Ist der Befestiger wie vorgesehen zwischen zwei Wänden einer Aufnahme beispielsweise einer Toilette angeordnet, stützt sich das elastische Element an einer der beiden Wände ab und beaufschlagt den Befestiger vergleichbar einer Druckfeder gegen die andere Wand. Der Befestiger ist dadurch klemmend zwischen den beiden Wänden der Aufnahme gehalten und lässt sich problemlos mit seinem Loch fluchtend mit einem Durchgangsloch in einer der beiden Wände der Aufnahme ausrichten. Dadurch wird erreicht, dass ein Bolzen, der beim Befestigen der Toilette an der Wand durch das Durchgangsloch in der einen Wand der Aufnahme durchtritt, in das Loch im Befestiger eintritt und es ist nicht notwendig, den Befestiger beim Aufsetzen der Toilette auf den Bolzen zu halten oder auszurichten. Der erfindungsgemäße Befestiger ist wie bereits gesagt für eine Toilette und allgemeiner für ein wandhängendes Sanitärobjekt, also beispielsweise auch ein Waschbecken vorgesehen. Allgemein ist der erfindungsgemäße Befestiger für wandhängende Objekte verwendbar.

Eine Ausgestaltung der Erfindung sieht einen Ring aus einem elastischen Material, beispielsweise aus Gummi, einem Elastomer oder einem elastischen Schaumstoff als elastisches Element vor.

Erfindungsgemäß weist das elastische Element seinerseits elastische Borsten auf, die ungefähr in Längsrichtung des Lochs des Befestigers abstehen. Dabei weist das elastische Element vorzugsweise die Form eines Rings oder einen Ring auf, von dem die elastischen Elemente abstehen. Mit "ungefähr in Längsrichtung" ist gemeint, dass die elastischen Elemente achsparallel zum Loch des Befestigers oder auch in einem Winkel zur achsparallelen Richtung abstehen. Die elastischen Elemente können beispielsweise auch gebogen oder wellenförmig sein. Wesentlich ist, dass die elastischen Elemente in der Längsrichtung des Lochs des Befestigers wirken und den Befestiger gegen eine andere von zwei eine Aufnahme begrenzenden Wände beaufschlagen, zwischen denen der Befestiger angeordnet ist, wenn sich die elastischen Wände an einer der beiden Wände abstützen.

In bevorzugter Ausgestaltung der Erfindung ist das elastische Element lösbar oder unlösbar mit dem Befestiger verbunden, das elastische Element kann beispielsweise an dem Befestiger angeklebt oder mit dem Befestiger einstückig sein. Eine Ausgestaltung der Erfindung sieht eine Schnappverbindung vor, die das elastische Element mit dem Befestiger verbindet. Diese Ausgestaltung der Erfindung ermöglicht eine Herstellung des Befestigers und des elastischen Elements aus verschiedenen Materialien und eine einfache Verbindung. Die Verbindung des elastischen Elements mit dem Befestiger vereinfacht die Handhabung beim Anordnen in der Aufnahme der Toilette, des Sanitärobjekts oder allgemein des Objekts.

Zur Befestigung auf beispielsweise einem Bolzen sieht eine Ausgestaltung ein Gewindeloch im Befestiger vor, das in das Loch des Befestigers mündet, so dass der Befestiger durch Eindrehen einer Klemmschraube auf dem Bolzen festklemmbar ist. Das Gewindeloch kann radial und/oder in einem anderen als einem rechten Winkel und/oder in Richtung einer Sekante in das Loch des Befestigers münden.

Des Weiteren betrifft die Erfindung ein wandhängendes Objekt, vorzugsweise ein wandhängendes Sanitärobjekt und insbesondere eine wandhängende Toilette, mit einer Aufnahme, in der ein Befestiger der vorstehend erläuterten Art angeordnet ist. Die Aufnahme weist zwei sie begrenzende Wände auf, zwischen denen der Befestiger angeordnet ist, wobei sich das elastische Element an einer der beiden Wände abstützt und den Befestiger gegen die andere Wand beaufschlagt. Die Aufnahme weist mehr als die beiden Wände auf, die sie an Stirnseiten des Befestigers begrenzen, nämlich insbesondere eine Wandung, die sich in einem Umfangsbereich der Aufnahme zwischen den beiden Wänden erstreckt. Der erfindungsgemäße Befestiger wird vorzugsweise so angeordnet, dass ihn sein elastisches Element gegen eine Wand der Aufnahme beaufschlagt, die einer Rückseite der Toilette zugewandt ist und ein Durchgangsloch für den Durchtritt eines Bolzens für die Befestigung der Toilette aufweist. Die Rückseite der Toilette ist diejenige, die bei einer vorgesehenen Befestigung der Toilette an einer Wand anliegt.

Die Erfindung wird nachfolgend anhand eines in der Zeichnung dargestellten Ausführungsbeispiels näher erläutert. Es zeigen:
- Figur 1: einen Längsschnitt einer wandhängenden Toilette mit einem Befestiger gemäß der Erfindung;
- Figur 2: den erfindungsgemäßen Befestiger aus Figur 1 in perspektivischer Explosionsdarstellung;
- Figur 3: den Befestiger aus Figur 2 in zusammengesetztem Zustand;
- Figur 4: einen Achsschnitt des Befestigers aus Figur 3;
- Figur 5: den Befestiger aus Figuren 2 bis 4 in einer Aufnahme der Toilette aus Figur 1;
- Figur 6: ein zweites Ausführungsbeispiel eines Befestigers gemäß der Erfindung in perspektivischer Explosionsdarstellung; und
- Figur 7: den Befestiger aus Figur 6 in zusammengesetztem Zustand.

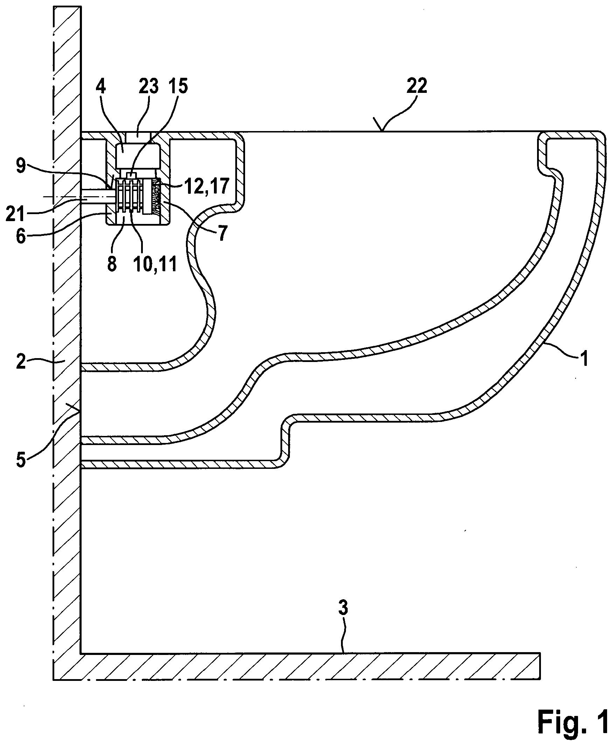

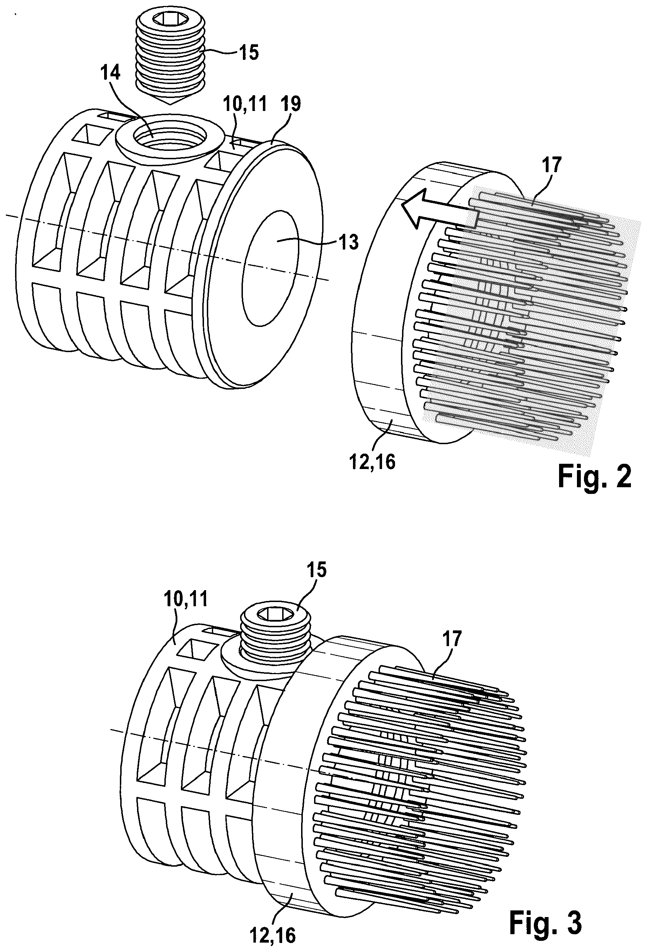

Die in Figur 1 gezeigte Toilette 1 ist zu einer wandhängenden Befestigung an einer Wand 2 mit Abstand über einem Boden 3 vorgesehen. Die Toilette 1 weist zwei seitlich angeordnete Aufnahmen 4 nahe einer Rückseite 5 der Toilette 1 auf. Die Rückseite 5 ist die Seite, die an der Wand 2 anliegt, wenn die Toilette 1 in vorgesehener Weise befestigt ist. Die Aufnahme 4 wird von zwei zueinander und zur Rückseite 5 parallelen Wänden 6, 7 und von einer U-förmigen Umfangswand 8 begrenzt, die die Aufnahme 4 auf einem Teil ihres Umfangs umschließt. Eine der Rückseite 5 nähere Wand 6 der Aufnahme 4 weist ein Durchgangsloch 9 auf. In der Aufnahme 4 der Toilette 1 ist ein Befestiger 10 gemäß der Erfindung angeordnet, der in Figuren 2 - 5 größer dargestellt ist. Der Befestiger 10 weist eine Hülse 11 und ein elastisches Element 12 auf. Die Hülse 11 weist ein axiales Durchgangsloch 13 auf und ist aus spritztechnischen Gründen außen verrippt, was für die Erfindung ohne Bedeutung ist. Außerdem weist die Hülse 11 ein radiales Gewindeloch 14 zum Eindrehen einer Klemmschraube 15 auf, die im Ausführungsbeispiel eine Inbusschraube ist. Das Gewindeloch 14 mündet radial in das Durchgangsloch 13 der Hülse 11.

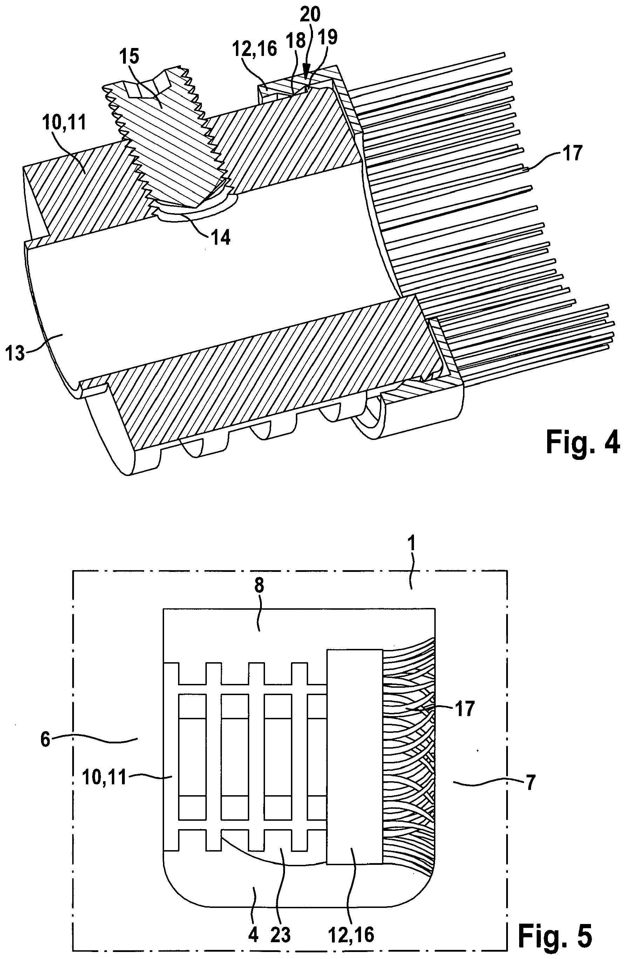

Das elastische Element 12 weist einen Ring 16 mit L-förmigem Ringquerschnitt auf, von dem achsparallel elastische Borsten 17 abstehen. An seiner Innenseite weist der Ring 16 einen flachen, dreiecksförmigen Wulst 18 auf, der mit einem umlaufenden, sägezahnförmigen Wulst 19 an einem Ende der Hülse 11 zusammenwirkt (Figur 4). Zur Verbindung wird der Ring 16 des elastischen Elements 12 auf das eine Ende der Hülse 11 aufgesetzt, wobei der Wulst 18 des Rings 16 hinter dem Wulst 19 der Hülse 11 einschnappt, wie es in Figur 4 zu sehen ist. Die beiden Wulste 18, 19 bilden eine Schnappeinrichtung 20, die das elastische Element 12 lösbar mit der Hülse 11 des Befestigers 10 verbindet, wobei das elastische Element 12 Bestandteil des Befestigers 10 ist. Mit einem beispielsweise ebenfalls sägezahnförmigen Wulst (nicht dargestellt) anstelle des dreiecksförmigen Wulstes 18 des Rings 16 des elastischen Elements 12 ließe sich das elastische Element 12 unlösbar mit der Hülse 11 verbinden, wobei die Verbindung in diesem Fall eher als Rastverbindung als als Schnappverbindung 20 zu bezeichnen wäre.

Der Befestiger 10 wird, wie es in Figuren 1 und 5 zu sehen ist, in der unten und/oder seitlich offenen Aufnahme 4 der Toilette 1 angeordnet, und zwar so, dass das Durchgangsloch 13 der Hülse 11 mit dem Durchgangsloch 9 in der Wand 6 der Aufnahme 4 fluchtet. Der Befestiger 10 mit dem auf das eine Ende der Hülse 11 aufgeschnappten elastischen Element 12 ist länger als ein Abstand der beiden Wände 6, 7 der Aufnahme 4 voneinander, so dass sich die Borsten 17 elastisch biegen, wie es in Figur 5 zu sehen ist. Die Borsten 17 drücken die Hülse 11 des Befestigers 10 gegen die der Rückseite 5 der Toilette 1 nahen Wand 6 der Aufnahme 4, die das Durchgangsloch 9 aufweist. Dabei befindet sich die Hülse 11 an der der Rückseite 5 der Toilette 1 nahen, das Durchgangsloch 9 aufweisenden Wand 6 und das elastische Element 12 an der gegenüberliegenden, d. h. der Rückseite 5 der Toilette 1 fernen Wand 7 der Aufnahme 4. Die elastischen Borsten 17 halten durch ihre Federkraft den Befestiger 10 klemmend in der Aufnahme 4, so dass sich der Befestiger 10 fluchtend zum Durchgangsloch 9 in der Wand 6 der Aufnahme 4 ausrichten lässt und sich nicht durch Schwerkraftwirkung von selbst verschiebt, auch nicht bei leichten Erschütterungen, wie sie auftreten können, wenn die Toilette 1 bei der Befestigung bespielsweise gegen die Wand 2 oder einen Bolzen stößt.

Zur wandhängenden Befestigung der Toilette 1 werden zwei Bolzen 21 horizontal und rechtwinklig aus der Wand 2 vorstehend sowie parallel zu- und mit Abstand voneinander in der Wand 2 verankert. Die Toilette 1 weist zu ihrer Befestigung zwei Aufnahmen 4 nahe an Seiten und unter einer Oberseite 22 der Toilette 1 auf. Die Toilette 1 wird auf die beiden Bolzen 21 so aufgesetzt, dass die Bolzen 21 durch die Durchgangslöcher 9 in den Wänden 6 der Aufnahmen 4 durchtreten. Die durch die Durchgangslöcher 9 durchtretenden Bolzen 21 treten in die Durchgangslöcher 13 der Hülsen 11 der Befestiger 10 ein, die zuvor fluchtend mit den Durchgangslöchern 9 in den Wänden 6 der Aufnahmen 4 ausgerichtet worden sind. In jeder Aufnahme 4 wird ein Befestiger 10 angeordnet, zur Befestigung der Toilette 1 werden also zwei Befestiger 10 verwendet. Die Toilette 1 wird auf den Bolzen 21 gegen die Wand 2 geschoben, so dass die Rückseite 5 der Toilette 1 an der Wand 2 anliegt. Anschließend werden die Klemmschrauben 15 festgezogen, so dass sie die Befestiger 10 auf den Bolzen 21 festklemmen. Die Toilette 1 ist nun wandhängend an der Wand 2 befestigt. Weil die elastischen Borsten 17 des elastischen Elements 12 die Hülse 11 des Befestigers 10 gegen die der Rückseite 5 der Toilette 1 nahen Wand 6 der Aufnahme 4 beaufschlagen, liegt die Hülse 11 an der Wand 6 spielfrei an und die Toilette 1 weist kein Spiel an der Wand 2 auf, wenn sie beim Festziehen der Klemmschrauben 15 gegen die Wand 2 gedrückt wird. Zum Festziehen sind die Klemmschrauben 15 durch Löcher 23 in der Oberseite 22 der Toilette 1 zugänglich, die zur Befestigung eines nicht gezeichneten, schwenkbaren Sitzrings und/oder eines ebenfalls nicht gezeichneten und ebenfalls schwenkbaren Deckels dienen. Die Löcher 23 münden von oben in die Aufnahmen 4.

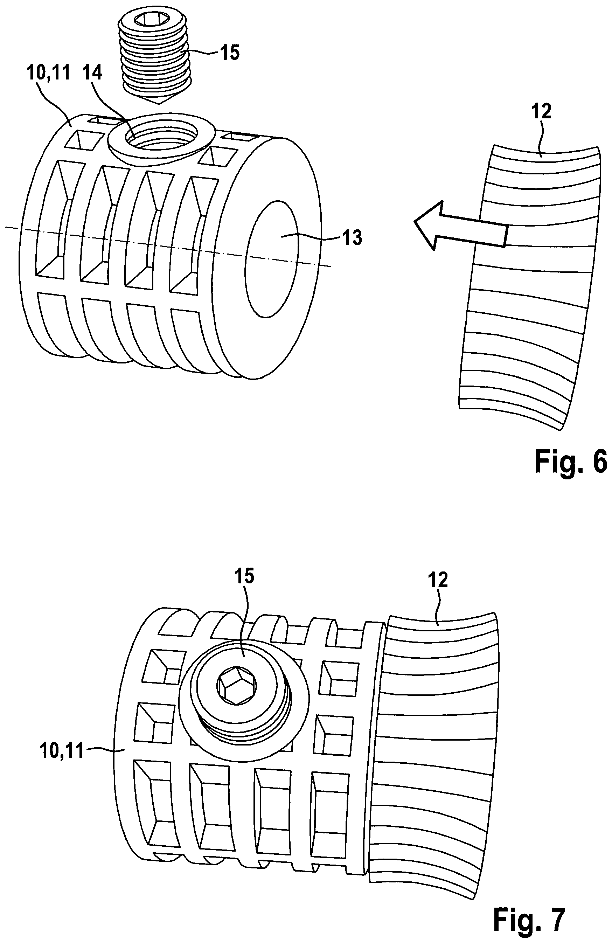

Bei der nachfolgenden Erläuterung der Figuren 6 und 7 werden für Bauelemente, die mit Bauelementen aus Figuren 1 - 5 übereinstimmen, gleiche Bezugszahlen verwendet. Übereinstimmend mit Figuren 1 - 5 weist der Befestiger 10 aus Figuren 6 und 7 eine Hülse 11 mit einem axialen Durchgangsloch 13 und einem radial in das Durchgangsloch 13 mündenden Gewindeloch 14 zum Eindrehen einer Klemmschraube 15 auf. Als elastisches Element 12 weist der Befestiger 10 aus Figuren 6 und 7 einen elastischen Ring auf, der beispielsweise aus einem Gummi oder einem Elastomer bestehen kann. Im Ausführungsbeispiel besteht das elastische Element 12 aus einem Ring aus einem schwammartigen Material, d. h. einem elastischen Schaumstoff. Der das elastische Element 12 bildende Ring weist ein auf beiden Seiten selbstklebendes, lochscheibenförmiges Klebeband auf, mit dem er wie in Figur 7 gezeigt, an die Stirnseite der Hülse 11 geklebt ist. Wie vorstehend zu Figuren 1 - 5 erläutert, wird der Befestiger 10 aus Figuren 6 und 7 in der Aufnahme 4 der Toilette 1 angeordnet, so dass das Durchgangsloch 13 in der Hülse 11 mit dem Durchgangsloch 9 in der Wand 6 der Aufnahme 4 fluchtet. Die Elastizität des aus Schaumstoff bestehenden Rings, der das elastische Element 12 bildet, hält den Befestiger 10 klemmend in seiner mit dem Durchgangsloch 9 fluchtenden Lage in der Aufnahme 4. Zur Vermeidung von Wiederholungen werden zur Erläuterung der Figuren 6 und 7 ergänzend die Erläuterungen zu Figuren 1 - 5 in Bezug genommen.

### Bezuaszeichenliste

- 1: Toilette
- 2: Wand
- 3: Boden
- 4: Aufnahme
- 5: Rückseite
- 6: Wand
- 7: Wand
- 8: Umfangswand
- 9: Durchgangsloch
- 10: Befestiger
- 11: Hülse
- 12: elastisches Element
- 13: Durchgangsloch
- 14: Gewindeloch
- 15: Klemmschraube
- 16: Ring
- 17: Borste
- 18: Wulst
- 19: Wulst
- 20: Schnappverbindung
- 21: Bolzen
- 22: Oberseite
- 23: Durchgangsloch

## Patentansprüche

1. Kombination eines Befestigers für ein wandhängendes Objekt, insbesondere für ein wandhängendes Sanitärobjekt (1), und eines elastischen Elements (12), wobei der Befestiger (10) eine Hülse (11) mit einem Loch (13) aufweist, mit dem der Befestiger (10) auf einen Bolzen (21) aufsetzbar ist, wobei mit der Hülse (11) das in einer Längsrichtung des Lochs (13) wirkende elastische Element (12) verbunden ist, **dadurch gekennzeichnet, dass** das elastische Element (12) elastische Borsten (17) aufweist, die ungefähr in Längsrichtung des Lochs (13) von der Hülse (11) abstehen.

2. Kombination nach Anspruch **1, dadurch gekennzeichnet, dass** das Loch (13) des Befestigers (10) ein Durchgangsloch (13) ist.

3. Kombination nach Anspruch 1 oder 2, **dadurch gekennzeichnet, dass** das elastische Element (12) einen Ring (16) aufweist.

4. Kombination nach einem der vorhergehenden Ansprüche, **dadurch gekennzeichnet, dass** das elastische Element (12) durch eine Schnappverbindung (20) mit dem Befestiger (10) verbunden ist.

5. Kombination nach einem der vorhergehenden Ansprüche, **dadurch gekennzeichent,** dass der Befestiger (10) ein Gewindeloch (14) aufweist, das in das Loch (13) mündet.

6. Wandhängendes Objekt mit einem Befestiger (10), einem elastischen Element (12) und mit einer Aufnahme (4) für den Befestiger (10) und das elastische Element (12),
wobei die Aufnahme (4) von zwei Wänden (6, 7) begrenzt ist, zwischen denen der Befestiger (10) und das elastische Element (12) angeordnet sind, deren eine Wand (6) ein Durchgangsloch (9) für den Bolzen (21) aufweist, wobei der Befestiger ein Loch (13) aufweist, mit dem der Befestiger (10) auf den Bolzen (21) aufsetzbar ist, und
wobei mit dem Befestiger (10) das in einer Längsrichtung des Lochs (13) wirkende elastische Element (12) verbunden ist,
**dadurch gekennzeichnet, dass** das elastische Element (12) sich an einer der Wände (7) der Aufnahme (4) abstützt und den Befestiger (10) gegen die andere Wand (6) drückt.

7. Wandhängendes Objekt nach Anspruch 6, **dadurch gekennzeichnet, dass** das wandhängende Objekt (1) ein Sanitärobjekt ist.

## Claims

1. Combination of a fastener for a wall-hung article, especially for a wall-hung sanitaryware item (1), and a resilient element (12), wherein the fastener (10) has a sleeve (11) having a hole (13) with which the fastener (10) is mountable on a bolt (21), the resilient element (12), which acts in a longitudinal direction of the hole (13), being connected to the sleeve (11), **characterised in that** the resilient element (12) has resilient brushes (17) which project from the sleeve (11) approximately in the longitudinal direction of the hole (13).

2. Combination according to claim 1, **characterised in that** the hole (13) of the fastener (10) is a through-hole (13).

3. Combination according to claim 1 or 2, **characterised in that** the resilient element (12) has a ring (16).

4. Combination according to any one of the preceding claims, **characterised in that** the resilient element (12) is connected to the fastener (10) by a snap connection (20).

5. Combination according to any one of the preceding claims, **characterised in that** the fastener (10) has a threaded hole (14) which opens into the hole (13).

6. Wall-hung article having a fastener (10), a resilient element (12) and having a receiver (4) for the fastener (10) and the resilient element (12),
wherein the receiver (4) is defined by two walls (6, 7) between which the fastener (10) and the resilient element (12) are arranged, one wall (6) of which has a through-hole (9) for the bolt (21),
wherein the fastener has a hole (13) with which the fastener (10) is mountable on the bolt (21), and
wherein the resilient element (12), which acts in a longitudinal direction of the hole (13), is connected to the fastener (10),
**characterised in that** the resilient element (12) is supported on one of the walls (7) of the receiver (4) and presses the fastener (10) against the other wall (6).

7. Wall-hung article according to claim 6, **characterised in that** the wall-hung article (1) is a sanitaryware item.

## Revendications

1. Ensemble combiné constitué d'un élément de fixation dévolu à un objet à suspension murale, en particulier à un objet sanitaire (1) à suspension murale, et d'un élément élastique (12), l'élément de fixation (10) étant muni d'une douille (11) percée d'un trou (13) par lequel ledit élément de fixation (10) peut être mis en place sur un boulon (21), sachant que ledit élément élastique (12), agissant dans une direction longitudinale dudit trou (13), est relié à ladite douille (11), **caractérisé par le fait que** l'élément élastique (12) est pourvu de picots élastiques (17) qui font saillie au-delà de la douille (11), approximativement dans la direction longitudinale du trou (13).

2. Ensemble combiné selon la revendication 1, **caractérisé par le fait que** le trou (13) de l'élément de fixation (10) est un trou traversant (13).

3. Ensemble combiné selon la revendication 1 ou 2, **caractérisé par le fait que** l'élément élastique (12) est doté d'une bague (16).

4. Ensemble combiné selon l'une des revendications précédentes, **caractérisé par le fait que** l'élément élastique (12) est relié à l'élément de fixation (10) par l'intermédiaire d'une liaison encliquetable (20).

5. Ensemble combiné selon l'une des revendications précédentes, **caractérisé par le fait que** l'élément de fixation (10) est muni d'un trou taraudé (14) débouchant dans le trou (13).

6. Objet à suspension murale, comprenant un élément de fixation (10), un élément élastique (12) et un logement (4) destiné audit élément de fixation (10) et audit élément élastique (12),
sachant que ledit logement (4) est délimité par deux parois (6, 7) entre lesquelles ledit élément de fixation (10) et ledit élément élastique (12) sont interposés, et au sein desquelles une paroi (6) est percée d'un trou traversant (9) dédié au boulon (21),
sachant que l'élément de fixation est percé d'un trou (13) par lequel ledit élément de fixation (10) peut être mis en place sur ledit boulon (21), et
sachant que ledit élément élastique (12), agissant dans une direction longitudinale dudit trou (13), est relié audit élément de fixation (10),
**caractérisé par le fait que** l'élément élastique (12) est en appui sur l'une (7) des parois du logement (4), et presse l'élément de fixation (10) contre l'autre paroi (6).

7. Objet à suspension murale selon la revendication 6, **caractérisé par le fait que** ledit objet (1) à suspension murale est un objet sanitaire.
